# EUROPÄISCHE PATENTSCHRIFT

(11) **EP 1 648 656 B1**
(45) Veröffentlichungstag und Bekanntmachung des Hinweises auf die Patenterteilung: **15.08.2007**
(21) Anmeldenummer: 03817599.8
(22) Anmeldetag: 31.07.2003
(51) Int. Cl.: B23Q 3/00, B23B 29/06, B23B 29/18, B23B 29/26, B23B 29/24

(54) **WERKZEUGTRÄGER FÜR DREHMASCHINEN**
TOOL SUPPORT FOR LATHES
PORTE-OUTILS POUR TOURS D'USINAGE

(43) Veröffentlichungstag der Anmeldung: 26.04.2006
(73) Patentinhaber: MicroSwiss Technologie AG, 4702 Oensingen (CH)
(72) Erfinder: UEBELHART, Baudoin, Ernest, CH-4515 Oberdorf (CH)
(74) Vertreter: Werner, Georges
(86) Internationale Anmeldenummer: PCT/CH2003/000526
(87) Internationale Veröffentlichungsnummer: WO 2005/009674

(56) Entgegenhaltungen:
- EP-A- 1 074 336
- GB-A- 2 080 174
- US-A- 3 893 356
- US-A- 4 457 065
- PATENT ABSTRACTS OF JAPAN Bd. 009, Nr. 158 (M-393), 3. Juli 1985 (1985-07-03) -& JP 60 034201 A (TAKAYUKI NOMURA), 21. Februar 1985 (1985-02-21)

## Beschreibung

Die vorliegende Erfindung betrifft einen Werkzeugträger, welcher dazu vorgesehen ist zum zerspanenden Bearbeiten eines Werkstückes an der Arbeitsspindel einer Drehmaschine angeordnet zu werden.

Werkzeugträger für Werkzeuge zum Anbringen an der Arbeitsspindel einer Drehmaschine sind bekannt und dienen dazu, Werkstücke aus beliebigem Material zerspanend zu bearbeiten. Je nach auszuführender Arbeit, sind die passenden Werkzeuge auszuwählen und am Werkzeugträger anzubringen, was mit teilweise aufwändigen Umrüstzeiten (Nebenzeiten) verbunden ist. Um dies zu vermeiden, werden konstruktiv komplizierte und kostenaufwändige Revolverköpfe mit unterschiedlichen Werkzeugen eingesetzt.

Aus JP 60 034 201 ist eine Lösung bekannt, bei welcher auf einem Grundträger ein quer zur Spindelachse verfahrbarer Schlitten vorgesehen ist, auf welchem zwei verschiedene Werkzeuge in einem Werkzeughalter angeordnet sind. Jedes Werkzeug kann individuell zum Einsatz kommen. Die Steuerung der Bewegungen ist aufwändig und von geringer Präzision.

Aufgabe der vorliegenden Erfindung war es, einen Werkzeugträger zu schaffen, welcher bei höchster Präzision sehr einfach aufgebaut ist und Nebenzeiten (Werkzeugwechsel) praktisch gegen Null reduziert.

Diese Aufgabe wird bei einem Werkzeugträger der eingangs definierten Art erfindungsgemäss durch die Merkmale des kennzeichnenden Teils von Anspruch 1 gelöst.

Besonders vorteilhafte Ausführungsformen der Erfindung sind in den abhängigen Ansprüchen definiert.

Gemäss der Erfindung ermöglicht der Werkzeugträger, zwei unterschiedliche Werkzeuge zu halten und selektiv einzusetzen, wobei die Kosten für die Bauteile des Trägers und deren Zahl minimal gehalten werden können, dies insbesondere, wenn für die Bewegung der Komponenten des

Trägers ein einziger Motor eingesetzt wird, dessen Welle sowohl den Schlitten wie auch selektiv die gewünschten Werkzeughalter verschiebt, dies über einen Hebel mit Innenkurve und zwei Kurvenscheiben.

Der erzwungene Bewegungsablauf erfolgt gesteuert sequentiell oder simultan entlang den Bewegungsachsen X und Y bzw. translatorisch. Dadurch ist sichergestellt, dass die Nebenzeiten bei der Werkzeugselektion auf ein Minimum reduziert sind.

Zur Durchführung komplizierter Bearbeitungsschritte können mehrere Werkzeugträger an der Spindel angeordnet werden (mit je zwei unterschiedlichen Werkzeugen), vorzugsweise unter Winkelabständen von 120°, was einerseits das Kollisionsrisiko benachbarter Werkzeuge ausschliesst und andererseits die Nebenzeit bei der Werkzeugselektion gegen Null bringt.

Dank diesem überraschenden Konzept wird die Produktivität einer Drehmaschine bei niedrigen Kosten nachhaltig erhöht.

Wenn die Werkzeugträger auf einem längsbeweglichen Schlitten (Werkzeugschlitten) montiert werden, lässt sich der Einsatz jedes Doppelwerkzeuges zusätzlich um eine Arbeitsebene (entlang der Z-Achse) erweitern.

Die Erfindung wird nachstehend anhand von in der Zeichnung dargestellten Ausführungsbeispielen und Funktionsabläufen noch etwas näher erläutert. Es zeigt:
- Fig. 1: rein schematisch die wesentlichen Komponenten eines erfindungsgemässen Werkzeugträgers;
- Fig. 2: einen Werkzeugträger nach der Erfindung mit besonders vorteilhaften Antriebsmitteln in drei bezüglich der Spindel unterschiedlichen Stellungen;
- Fig. 3-8: verschiedene Betriebsmöglichkeiten, rein schematisch;
- Fig. 9: eine Variante eines Werkzeugträgers, gemäss einem weiteren Aspekt der Erfindung, und
- Fig. 10-11: eine Kombination der beiden Werkzeugträgersysteme.

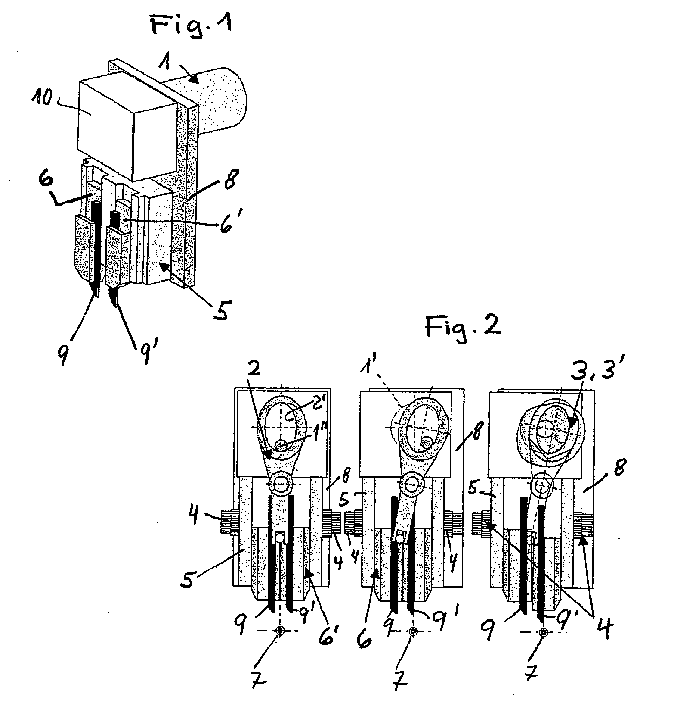

Figur 1 der Zeichnung zeigt rein schematisch einen Werkzeugträger nach der Erfindung, mit zentralem Antriebsmotor 1, einem Grundträger 8, auf welchem ein quer verschiebbarer Schlitten 5 mit zwei Werkzeughaltern 6,6' angeordnet ist. In den Haltern 6,6' sind unterschiedliche Werkzeuge 9,9' gehalten. Hinter der Abdeckung 10, welche mit dem Schlitten 5 verbunden und verschiebbar ist, befindet sich der eigentliche Antrieb der Steuerelemente 2 und 3,3' (s. Fig. 2).

Die Grundplatte 8 ist üblicherweise auf einem Z-Schlitten (nicht dargestellt) aufgebaut, was die zusätzliche gesteuerte Bewegung in Z-Richtung (entlang der Spindel) erlaubt.

Durch die zusätzlichen Z-Bewegungen werden Simultanarbeitsgänge möglich, welche insbesondere für Langdrehautomaten eine massive Produktivitätssteigerung bewirken.

Figur 2 illustriert schematisch das Funktionsprinzip des Doppel- bzw. Zwillingswerkzeugträgers:

Der Motor 1 treibt über die Motorwelle 1' die Steuerelemente Hebel 2 und Nocken 3 an. Der Hebel 2 mit einer Innenkurve 2' dient der Auslenkung in Querrichtung (Y) des Schlittens 5 bis an einstellbare Anschläge 4 dar (z.B. Rasterschrauben), wobei die Wegbegrenzung der Mittenstellung (Fig. 2, links aussen) der Werkzeuge 9,9' dient.

Die zwei Nocken 3,3' dienen dazu, das gewünschte Werkzeug auf den Arbeitsdurchmesser zu bringen (in X-Richtung).

Die Verschiebung in Y-Richtung kann wie gezeigt über den Hebel 2 erfolgen (bis zum gewünschten Anschlag, bei Weiterdrehen der Motorwelle wird das Folgeorgan der Hebelinnenkurve gegen Federkraft weiter bewegt, während der Schlitten still steht), oder es kann ein separater Antrieb mit Messsystem erfolgen (Angriff z.B. an Längsseite des Schlittens).

Aus Figur 2 geht hervor, wie nach Einstellung der Mittenstellung des Schlittens 5 (links) der Anschlag für das rechte Werkzeug 9' angefahren wird (Mitte) und danach das Werkzeug 9' über den einen Nocken 3' in Arbeitsstellung zur Spindel 7 hin gefahren wird.

Der Verschub der Werkzeuge 9,9' über die zugehörigen Nocken 3,3' erfolgt durch Angriff der Nocken and einer Verlängerung der Werkzeughalter 6,6'. Letztere werden gegen eine Rückstellkraft (Feder, nicht dargestellt) bewegt, sodass das nicht durch den Nocken angesteuerte Werkzeug immer ausser Arbeitsstellung gehalten wird.

Die Motorwelle 1', ausgehend von der Mittenstellung, ist nach beiden Seiten bis zu 180° verdrehbar.

Es können, wie erwähnt, mehrere Werkzeugträger um eine Spindel angeordnet werden, wobei sich die beschriebenen Vorteile vielfach verwenden lassen. Die dabei erreichbare Leistungssteigerung lässt den Ersatz der bis anhin als "unersetzbar" geltenden kurvengesteuerten Drehautomaten zu.

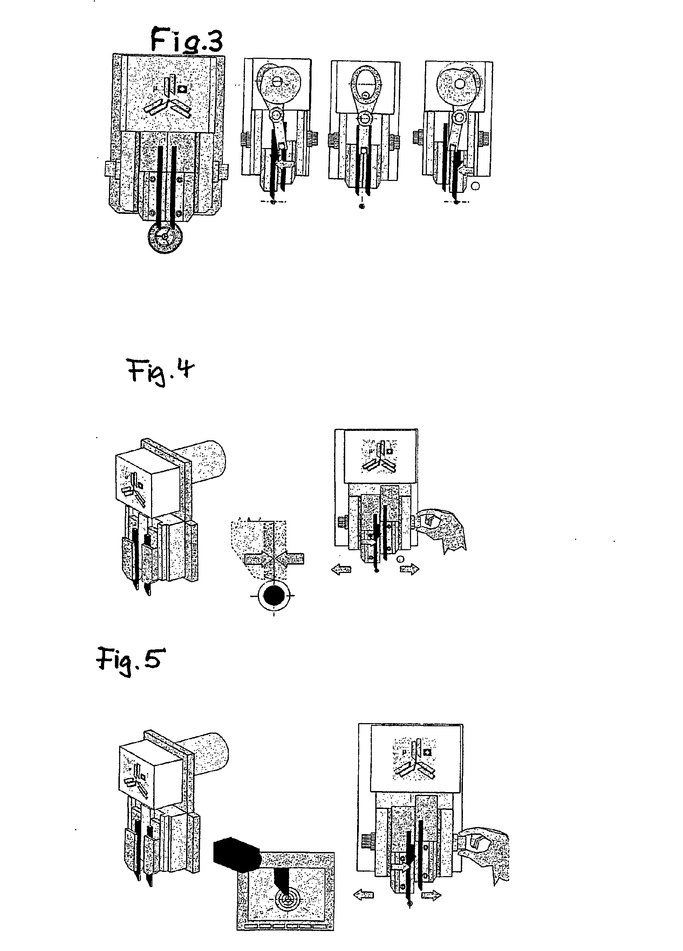

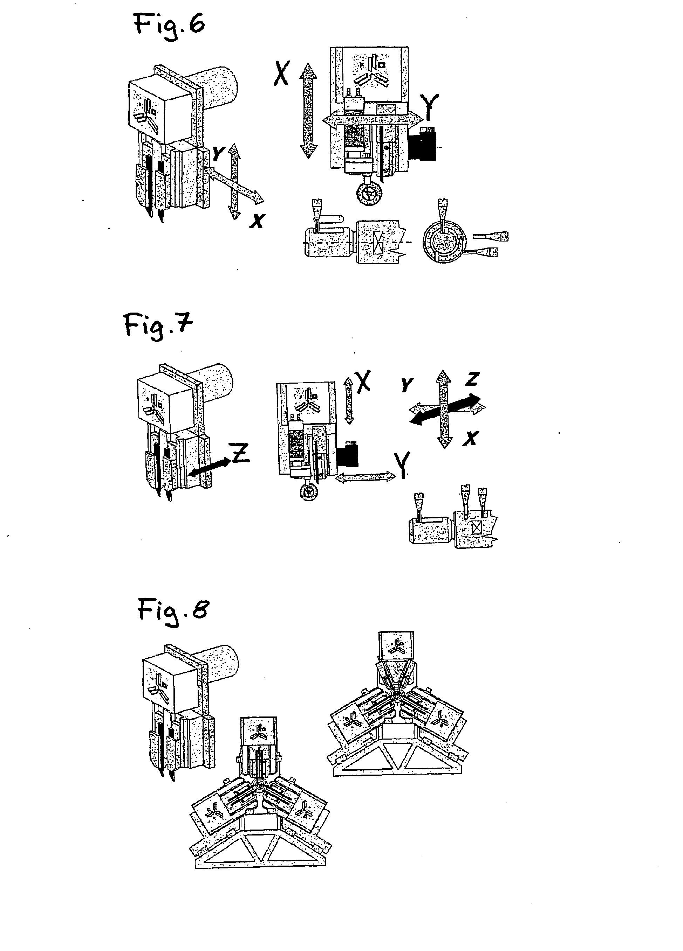

Aus den Figuren 3-8 sind verschiedene Betriebs- und Einsatzmöglichkeiten ersichtlich.

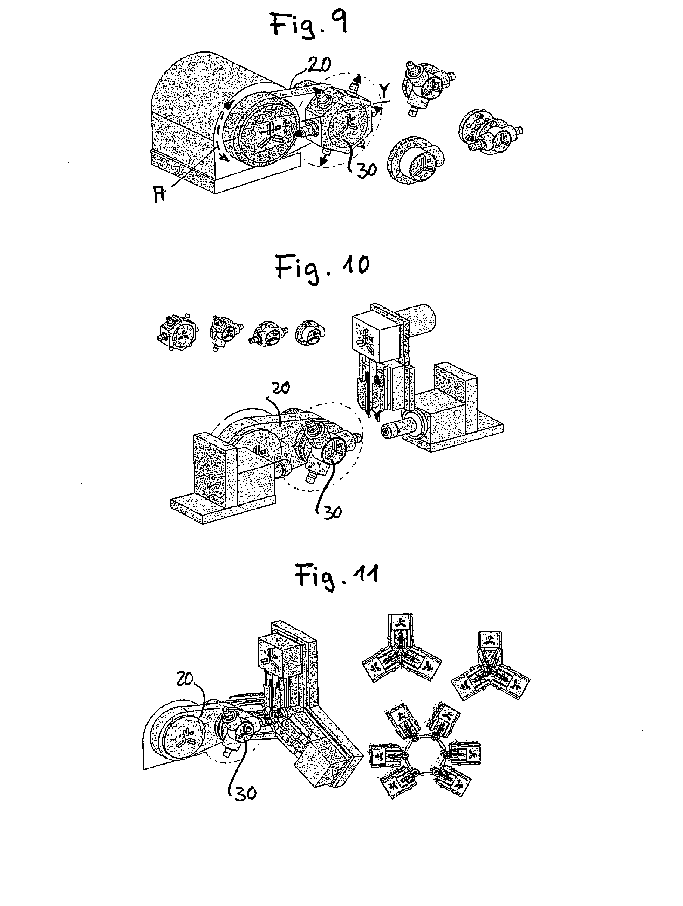

Ebenfalls Gegenstand der Erfindung ist ein Werkzeugträger, wie in Figur 9 gezeigt, welcher einen um eine Achse motorisch gesteuert verschwenkbaren Hebel 20 aufweist, an dessen freiem Ende ein Werkzeug-Revolverkopf 30 angeordnet ist. Dank dem schwekbaren Hebel 20 (Y-Achse) ist der Revolver 30 in der Höhe auf einfachste Weise verstellbar (A), was eine hohe Genauigkeit gewährleistet.

Der Werkzeugträger mit dem schwenkbaren Arm 20 ist an einer Drehmaschine angeordnet vorzugsweise quer und längs zur Spindel verfahrbar (X- bzw. Z-Achse).

Dieser Werkzeugträger eignet sich besonders zum Einsatz in Kombination mit dem weiter oben beschriebenen Werkzeugträger, was zu einem besonders vielfältigen Einsatz der verschiedenen Werkzeuge führt. Einsatzmöglichkeiten sind in den Figuren 10 und 11 schematisch dargestellt.

## Patentansprüche

1. Werkzeugträger, welcher dazu vorgesehen ist zum zerspanenden Bearbeiten eines Werkstückes an der Arbeitsspindel einer Drehmaschine angeordnet zu werden, mit
- einem Grundträger (8);
- einem auf dem Grundträger (8) angeordneten, bei an der Drehmaschine montiertem werkzeugträger quer zur Spindelachse (7) entlang einer Achse (Y) gesteuert verfahrbaren Schlitten (5);
- zwei auf dem Schlitten (5) parallel zueinander angeordneten Werkzeughaltern (6,6') zur Halterung unterschiedlicher Werkzeuge (9,9'), **dadurch gekennzeichnet, dass** die Halter (6,6') in einem Winkel von 90° zur Bewegungsrichtung des Schlittens (5) individuell bzw. selektiv zur Spindelachse (7) hin entlang einer Achse (X) in Arbeitsstellung bzw. aus dieser verfahrbar angeordnet sind und dass
- Antriebsmittel (1,2,3) vorgesehen sind, um den Schlitten (5) und die Werkzeughalter (6,6') sequentiell oder simultan entlang ihrer Bewegungsachsen (Y bzw. X) in eine vorbestimmte Arbeitsstellung zu verfahren.

2. Werkzeugträger nach Anspruch 1, **dadurch**
**gekennzeichnet, dass** der Grundträger (8) entlang einer parallel zur Spindelachse (7) verlaufenden Achse (Z) verstellbar ist.

3. Werkzeugträger nach Anspruch 2, **dadurch**
**gekennzeichnet, dass** der Grundträger (8) auf einem längs der Spindelachse (7) verfahrbaren Werkzeugschlitten (5) montierbar ist.

4. Werkzeugträger nach Anspruch 1, **dadurch**
**gekennzeichnet, dass** die Antriebsmittel (1,2,3) einen gemeinsamen Motor (1) umfassen, dessen Motorwelle (1') einerseits einen verschwenkbaren Steuerhebel (2) mit Innensteuerkurve (2') antreibt, dessen Auslenkung die Verschiebung des Schlittens (5) zwischen zwei Endanschlägen (4) bewirkt und andererseits mit zwei Kurvenscheiben (3,3') bestückt ist, welche selektiv den einen bzw. anderen Werkzeughalter (6;6') in die Arbeitsstellung bewegen.

5. Werkzeugträger nach Anspruch 4, **dadurch gekennzeichnet, dass** die Endanschläge (4) individuell in die gewünschte Stellung einstellbar sind.

6. Werkzeugträger nach Anspruch 4 oder 5, **dadurch gekennzeichnet, dass** die Motorwelle (1') aus einer Mittelstellung in beiden Drehrichtungen um bis zu 180° verstellbar ist.

7. Werkzeugträger nach einem der Ansprüche 1-6, **dadurch gekennzeichnet, dass** die Antriebsmittel (1,2,3) rechnergesteuert sind.

8. Werkzeugträger nach einem der Ansprüche 1-7, **dadurch gekennzeichnet, dass** die Werkzeughalter (6,6') gegen eine Rückstellkraft, z.B. gegen eine Federkraft, in die Arbeitsstellung bewegt werden.

9. Werkzeugträger nach Anspruch 4 und 8, **dadurch gekennzeichnet, dass** der Mitnehmer (1") für den motorischen Antrieb des verschwenkbaren Steuerhebels (2) gegen eine Rückstellkraft weiter verschiebbar ist, nachdem der Schlitten (5) eine der Endstellungen (4) erreicht hat.

10. Werkzeugträger nach Anspruch 7, **dadurch gekennzeichnet, dass** die Antriebsmittel (1,2,3) mit Messsystemen gekoppelt sind.

11. Drehmaschine mit Werkzeugträger nach einem der Ansprüche 1-10, **dadurch gekennzeichnet, dass** mehrere Werkzeugträger um die Arbeitsspindel (7) angeordnet sind, vorzugsweise sternförmig mit Winkelabständen von 120°, wobei jeder Werkzeugträger mit eigenen Antriebsmitteln (1,2,3) für die verfahrbaren Komponenten (5;6,6') ausgerüstet ist.

12. Werkzeugträger nach Anspruch 1, **dadurch gekennzeichnet, dass** er mit einem um eine Achse motorisch gesteuert verschwenkbaren Hebel (20) versehen ist, an dessen freien Ende ein Werkzeug-Revolverkopf (30) angeordnet ist. ,

## Claims

1. Tool support provided for being mounted at the working spindle of a lathe for machining a workpiece, having
● a basic support (8);
● a slide (5) mounted on said basic support (8) and displaceable in a controlled manner along an axis (Y) transversely to the axis of the spindle (7) when the support is mounted on the lathe;
● two tool-holders (6, 6') arranged parallel to each other in said slide (5) for carrying different tools (9, 9')
**characterized in that** said tool-holders (6, 6') in a manner displaceable individually respectively selectively in an angle of 90° with respect to the direction of movement of said slide (5) along an axis (X) towards the axis of the spindle into a working position or in the other direction out of such position and **in that** driving means (1, 2, 3) are provided for displacing said slide (5) and the tool-holders (6, 6') sequentially or individually along their axis of movement (Y resp. X) into a predetermined working position.

2. Support according to claim 1, **characterized in that** the basic support (8) is displaceable along an axis (Z) extending parallel to the axis (7) of the spindle.

3. Support according to claim 2, **characterized in that** the basic support (8) is provided for being mounted on a tool-slide (5) which is displaceable along the axis (7) of the spindle.

4. Support according to claim 1, **characterized in that** said driving means (1, 2, 3) comprise a common motor (1) whose driving shaft (1') on the one hand is driving pivotable control lever (2) with an inner control curve (2'), the deviation of the lever causing the displacement of the slide (5) between two end stops (4) and on the other hand is equipped with two cam disks (3, 3') which selectively displace the one or the other of said tool-holders (6, 6') into its working position.

5. Support according to claim 4, **characterized in that** said end stops (4) are individually movable into the desired position.

6. Support according to claim 4 or 5, **characterized in that** the driving shaft (1') is adjustable from a neutral position in both rotating directions by an angle of up to 180°.

7. Support according to any of the claims 1 - 6, **characterized in that** said driving means (1, 2, 3) are computer controlled.

8. Support according to any of the claims 1 - 7, **characterized in that** the tool-holders (6, 6') are movable into the working position against a reset force, e.g. a spring force.

9. Support according to claim 4 and 8, **characterized in that** the engaging piece (1") for the motor drive of the pivotable control lever (2) is displaceable further against a reset force once the slide (5) has reached one of the end positions (4).

10. Support according to claim 7, **characterized in that** said driving means (1, 2, 3) are coupled with measuring systems.

11. A lathe equipped with tool-supports according to any of the claims 1 - 10, **characterized in that** a plurality of tool supports is arranged around the working spindle (7) preferably starlike with angular distances of 120°, whereby each tool-support is provided with its own driving means (1, 2, 3) for its displaceable components (5; 6, 6').

12. Support according to claim 1, **characterized in that** it is equipped with a lever (20) which is pivotable by motor in a controlled manner and having at its free end a tool turret (30)

## Revendications

1. Support d'outils prévu pour être monté à l'arbre moteur d'un tour pour l'usinage par enlèvement de copeaux d'une pièce à travailler, avec
● un support de base (8) ;
● un chariot (5) monté sur le support de base déplaçable de manière contrôlée le long d'un axe (Y) traversalement a l'axe de l'arbre (7) lorsque le support est monté sur le tour ;
● deux porte-outils (6, 6') disposés parallèlement l'un par rapport à l'autre sur ledit chariot (5) pour portes des outils différents (9, 9').
**Caractérisé en ce que** les porte-outils (6, 6') sont disposés individuellement respectivement sélectivement de manière déplaçable sous un angle de 90° par rapport à la direction de mouvement du chariot (5) le long d'un axe (X) vers l'axe de l'arbre en une position de travail ou en sens inverse hors d'une telle position et **en ce que** des moyens d'entraînement (1, 2, 3) sont prévus, pour déplacer ledit chariot (5) et lesdits porte-outils (6, 6') séquentiellement ou individuellement le long des leurs axes de mouvement (Y resp. X) dans une position de travail prédéterminée.

2. Support selon la revendication 1, **caractérisé en ce que** le support de base (8) peut être déplacé le long d'un axe (Z) qui s'étend parallèlement à l'axe de l'arbre (7).

3. Support selon la revendication 2, **caractérisé en ce que** le support de base (8) peut être monté sur un chariot (5) déplaçable le long de l'axe de l'arbre (7).

4. Support selon la revendication 1, **caractérisé en ce que** les moyens d'entraînement (1, 2, 3) comprennent un moteur (1) commun, dout l'arbre moteur (1') entraîne d'un côté un levier de commande (2) avec came de commande intérieure (2'), dont la déviation provoque le déplacement du chariot (5) entre deux butées terminales (4) et d'un autre côté es muni de deux disques à came (3, 3') qui déplacent sélectivement l'un ou l'autre respectivement des porte-outils (6, 6') dans la position de travail.

5. Support selon la revendication 4, **caractérisé en ce que** les butées terminales (4) peuvent être amenées individuellement dans la position désirée.

6. Support selon la revendication 4 ou 5, **caractérisé en ce que** l'arbre moteur (1') peut être réglé à partir d'une position médiane dans les deux directions de rotation d'un angle jusqu'à 180°

7. Support selon l'une des revendications 1 - 6, **caractérisé en ce que** les moyens d'entraînement (1, 2, 3) sont commandés par ordinateur.

8. Support selon l'une des revendications 1 - 7, **caractérisé en ce que** les porte-outils (6, 6') sont déplacés en position de travail contre une force de rappel, comme par exemple une ressort de rappel.

9. Support selon la revendication 4 et 8, **caractérisé en ce que** le tenon d'entraînement (1") pour l'entraînement par moteur du levier de commande (2) pivotable peut être déplacé plus loin, après que le chariot (5) ait atteint l'une des positions terminales (4), contre une force de rappel.

10. Support selon la revendication 7, **caractérisé en ce que** les moyens d'entraînement sont couplés avec des systèmes de mesure.

11. Tour avec support d'outils selon l'une des revendications 1 - 10, **caractérisé en ce que** plusieurs dispositifs sont arrangés autour de l'arbre (7), de préférence en étoile sous des angles de 120°, chaque dispositif porte-outils étant équipé avec des moyens d'entraînement (1, 2, 3) propres pour les composantes déplaçables (5; 6, 6').

12. Support selon la revendication 1, **caractérisé en ce qu'**il est équipé avec un levier (20) pivotable par entraînement moteur autour d'un axe, ce levier étant muni à son extrémité libre avec une tête revolver (30) pour outils.
